# EUROPÄISCHE PATENTSCHRIFT

(11) **EP 2 283 981 B1**
(45) Veröffentlichungstag und Bekanntmachung des Hinweises auf die Patenterteilung: **05.10.2011**
(21) Anmeldenummer: 10169560.9
(22) Anmeldetag: 14.07.2010
(51) Int. Cl.: B25J 9/02, B25J 9/10

(54) **Handhabungseinrichtung zum Bewegen von Gütern**
Handling device for moving goods
Dispositif de manipulation destiné à déplacer des marchandises

(30) Priorität: 04.08.2009 DE 102009026318
(43) Veröffentlichungstag der Anmeldung: 16.02.2011
(73) Patentinhaber: Krones AG, 93073 Neutraubling (DE)
(72) Erfinder: Hutter, Alban, 83242 Reit im Winkl (DE); Chrzibek, Pavel, 83026 Rosenheim (DE)
(74) Vertreter: Reichert, Werner Franz

(56) Entgegenhaltungen:
- WO-A1-01/03891
- DE-A1- 10 017 293
- JP-A- 2000 009 741
- JP-A- 2005 014 161
- US-A1- 2008 064 543

## Beschreibung

Die vorliegende Erfindung betrifft eine Handhabungseinrichtung zum Bewegen von Gütern. Die Handhabungseinrichtung ist mit einer ersten Antriebseinheit ausgestattet. Der Antriebseinheit ist ein Werkzeughalter zugeordnet. Der Werkzeughalter ist in zwei, in einem Winkel zueinander stehenden Richtungen mittels zweier ortsfester Drehachsen in Verbindung mit einem flexiblen, bandförmigen Element bewegbar.

Das deutsche Gebrauchsmuster DE 94 17 837 offenbart eine Vorrichtung zum Verfahren von Körpern, die mit einem flexiblen Element angetrieben wird. Durch die gezielte Steuerung der motorisch angetriebenen Umlenkrollen ist es möglich, die komplette Positionierung der Greifvorrichtung in Y- und Z-Richtung zu steuern. Durch diese gezielte Steuerung ist es möglich, eine Greifvorrichtung an jeder beliebigen Position im Bereich des Portalträgers zu lenken. Weiterhin sind die beiden für die Bewegung der Greifvorrichtung benötigten Motoren ortsfest angebracht.

Die deutsche Patentanmeldung DE 100 17 293 A1 offenbart einen Antrieb zum Positionieren von Geräten und/oder Gegenständen in X-Y Richtung oder in X-Z Richtung über einer Fläche. Durch gezieltes Ansteuern der Antriebsrollen wird der vertikale Ausleger auf dem horizontalen Ausleger entweder in X-Richtung oder in Y-Richtung oder in Z-Richtung verfahren. Die Bewegung in X-Y Richtung oder in X-Z Richtung erfolgt nach demselben Prinzip wie bei dem Gebrauchsmuster DE 94 17 837.

Die deutsche Patentanmeldung DE 195 15 994 A1 offenbart einen Raumportal-Bewegungsautomaten, insbesondere zum Transportieren von Autopressteilen aus einer Großteilstufenpresse auf Paletten. Erfindungsgemäß weist der Bewegungsautomat die nachfolgenden Merkmale auf: eine erste durch eine erste Antriebseinrichtung angetriebene Hauptachse, eine zweite durch eine zweite Antriebseinrichtung angetriebene Hauptachse, die quer zu der ersten Hauptachse verläuft, und eine durch eine dritte Antriebseinrichtung angetriebene Hauptachse, die in etwa senkrecht zu der von den anderen Hauptachsen aufgespannten Ebene verläuft. Desweiteren ist eine bewegbare Greifeinrichtung zum Greifen der zu transportierenden Teile vorgesehen. Alle drei Antriebseinrichtungen besitzen jeweils einen eigenen Riemenantrieb mit einem separaten Antriebsmotor. Der Werkzeugträger ist an zwei vertikalen Trägern angelenkt, die jeweils einer Antriebseinrichtung zugeordnet sind.

In der europäischen Patentschrift EP 1 210 214 B1 wird eine Robotereinheit zum Umsetzten von Arbeitsobjekten offenbart. Die Robotereinheit ist in der Hauptsache zum Umsetzen von Gegenständen in Pressen, zum Beispiel der Stahlindustrie, vorgesehen. An einem vertikalen Träger sind über zwei verlängerte Einheiten die Greifeinheiten angelengt. Um den vertikalen Träger in X- und/oder Y-Richtung bewegen zu können, wird die Robotereinheit über zwei Motoren und über die Antriebsräder, die mit einem flexiblen Element (Zahnriemen) zusammenwirken, angetrieben. Je nach Laufrichtung und Geschwindigkeit sind die Greifeinheiten positionierbar.

Die japanische Patentanmeldung JP 10272570 A offenbart einen Portalroboter, der mit mindestens zwei Schweißeinheiten ausgestattet ist. Die Schweißeinheiten sind in X-, Y- und Z-Richtung beweglich. Weiterhin ist es möglich die Schweißeinheiten selber um 180° zu schwenken. In einer weiteren Ausgestaltungsform ist der Portalroboter mit vier Schweißeinheiten versehen, die jeweils an einem gesonderten Träger befestigt und in X-, Y- und Z-Richtung beweglich sind.

Die japanische Patentanmeldung JP 2003-305682 betrifft einen Antrieb für einen Roboter, der in drei Achsen beweglich ist. Um den Roboter über die gewünschten Achsen zu verfahren, ist der Antrieb mit 3 Motoren ausgestattet, die jeweils für die Bewegung in eine Richtung eingesetzt werden. Zur Übertragung der Drehbewegungen der Motoren an die Antriebseinheiten werden Wellen, Hohlwellen und Zahnräder verwendet.

Das US Patent US 7,344,017 B1 beschreibt eine Maschine, die in drei Achsen verfahrbar ist. Zum Bewegen der Maschine in die drei Bewegungsrichtungen ist jeweils eine separate Antriebseinheit vorgesehen. Jede dieser Antriebseinheiten besitzt einen Motor, mindestens ein flexibles Element zur Übertragung der Kräfte von dem Motor und mehrere Umlenkrollen. Durch entsprechende Steuerung der Maschine ist es möglich, eine Arbeitseinheit an jeden Punkt im Inneren der Maschine zu bewegen.

Aufgabe der Erfindung ist, eine Handhabungseinrichtung zu schaffen, mit der hohe Traglasten sicher zu bewegen und positionsgenau aufzunehmen und/oder abzusetzen sind.

Die obige Aufgabe wird durch eine Handhabungseinrichtung gelöst, die die Merkmale des Anspruchs 1 umfasst.

Es ist eine Handhabungseinrichtung zum Bewegen von Gütern offenbart. Diese Handhabungseinheit besitzt eine erste Antriebseinheit und mindestens einen Werkzeughalter. Der mindestens eine Werkzeughalter ist in zwei unter einem Winkel zueinander stehenden Richtungen mittels zweier ortsfester Drehachsen in Verbindung mit einem flexiblen, bandförmigen Element bewegbar. Dem mindestens einen Werkzeughalter ist eine zweite Antriebseinheit zugeordnet. Der mindestens eine Werkzeughalter ist zwischen der ersten Antriebseinheit und der zweiten Antriebseinheit gehaltert.

Es können mehrerer Werkzeughalter mit den dazugehörigen Werkzeugen in einer Handhabungseinrichtung angeordnet werden. Es ist zum Beispiel möglich, zwei Werkzeughalter mit je zwei Antriebseinheiten parallel nebeneinander in die Handhabungseinrichtung einzubauen. Weiterhin ist es möglich, die Werkzeughalter mit den zugehörigen Antriebseinheiten derart zu platzieren, dass mit den Werkzeugen ein annähernd gleicher Arbeitsbereich abgedeckt wird. In einer weiteren Ausführungsform ist es möglich, einen dritten Werkzeugträger mit einer konventionellen, aus der DE 94 17 837 bekannten Antriebseinheit einseitig mit dem Werkzeugträger zu verbinden. Die gesamte Anordnung wird mit in die Handhabungseinrichtung integriert. Für den Fachmann ist klar, dass die Anzahl der Handhabungseinrichtungen und deren Ausgestaltung von dem Platzbedarf der einzelnen Komponenten und von den auszuführenden Verpackungsaufgaben abhängig ist, die mit der Handhabungseinrichtung erfüllt werden sollen. Somit stellt die vorab beschriebene Aufzählung der Ausführungsformen keine abschließende Beschränkung der Erfindung dar. Es ist weiterhin klar, dass auch die Ausgestaltung der Antriebseinheiten der einzelnen Werkzeugträger je nach Aufgabe des angelenkten Werkzeuges variieren kann.

Das flexible Element kann zum Beispiel ein Gurtband, eine Kette oder ein anderes vollständig in der Antriebseinheit umlaufendes flächiges Element sein.

Die Steuerung der Bewegung des Werkzeughalters erfolgt analog zu den Druckschriften DE 94 17 837 und DE 100 17 293 A1. Durch das Bewegen beider Antriebsmotore im Uhrzeigersinn wird der vertikale Ausleger z.B. nach rechts verfahren. Werden beide Antriebsmotoren im Gegenuhrzeigersinn bewegt, fährt der vertikale Ausleger nach links. Durch ein Bewegen der beiden Antriebsmotoren in entgegengesetzte Drehrichtungen wird der vertikale Ausleger nach oben oder unten bewegt. Diese Bewegungen werden erzielt, wenn die Antriebsmotore mit gleicher Drehzahl laufen. Werden zusätzlich zu den Drehrichtungen noch die Drehzahlen der Antriebsmotore verändert, ist es möglich, die horizontalen und die vertikalen Bewegungen zu kombinieren.

Die Handhabungseinrichtung weist zwei ortsfeste Drehachsen auf. Gemäß einer ersten Ausführungsform sind die erste und die zweite Antriebseinheit über eine gemeinsame erste Welle und eine gemeinsame zweite Welle miteinander verbunden. Die gemeinsame erste Welle ist über einen ersten Motor und die gemeinsame zweite Welle über einen zweiten Motor antreibbar.

Zur Koordinierung der Bewegung der Handhabungseinrichtung gemäß der obigen Ausführungsform ist der erste Motor und der zweite Motor über eine Einrichtung hinsichtlich deren Drehzahl und Drehrichtung steuerbar. Der mindestens eine Werkzeughalter ist in zwei in einem Winkel zueinander stehenden Richtungen bewegbar.

Gemäß einer zweiten Ausführungsform besitzt die Handhabungseinrichtung einen ersten, einen zweiten und einen dritten Motor. Dabei ist die erste ortsfeste Drehachse der ersten und der zweiten Antriebseinheit über eine gemeinsame erste Welle miteinander verbunden. Die erste Welle ist über den ersten Motor antreibbar. Auf die zweite ortsfeste Drehachse wirken der zweite und der dritte Motor ein, so dass die erste Antriebseinheit über den zweiten Motor und die zweite Antriebseinheit über den dritten Motor antreibbar sind.

Gemäß einer zweiten Ausführungsform sind bei der Handhabungseinrichtung der erste Motor und das Motorenpaar aus dem zweiten Motor und dem dritten Motor ebenfalls über eine Einrichtung steuerbar. Der zweite Motor und der dritte Motor sind dabei zusätzlich mit der Einheit synchronisierbar. Der mindestens eine Werkzeughalter ist in zwei in einem Winkel zueinander stehenden Richtungen bewegbar.

Gemäß einer dritten Ausführungsform besitzt die Handhabungseinrichtung einen ersten, einen zweiten, einen dritten und einen vierten Motor. Der erste Motor und der zweite Motor wirken auf die erste ortsfeste Drehachse bzw. auf die zweite ortsfeste Drehachse ein. Der dritte Motor und der vierte Motor wirken auf die zweite ortsfeste Drehachse bzw. auf die erste ortsfeste Drehachse ein. Die erste Antriebseinheit ist über den ersten Motor und den zweiten Motor (26b) antreibbar. Die zweite Antriebseinheit ist über den vierten Motor und den dritten Motor antreibbar.

Die Steuerung der Handhabungseinrichtung gemäß der obigen Ausführungsform erfolgt ebenfalls über die Einrichtung, die jeweils den ersten Motor und den vierten Motor des ersten Motorenpaares und den zweiten Motor und den dritten Motor des zweiten Motorenpaares synchronisiert. Ebenso werden der erste Motor und der vierte Motor des ersten Motorenpaars und der zweite Motor und der dritte Motor des zweiten Motorenpaars hinsichtlich ihrer Drehzahl und Drehrichtung gesteuert. Der mindestens eine Werkzeughalter wird dadurch in zwei in einem Winkel zueinander stehenden Richtungen bewegt.

Jede der zwei Antriebseinheiten eines Werkzeughalters ist an jeweils einer ersten Schiene und einer zweiten Schiene gehaltert. Die erste und zweite Schiene sind an einem Rahmengestell der Handhabungseinheit angelenkt.

In einer weiteren Ausführungsform trägt die Handhabungseinrichtung mindestens zwei Werkzeughalter. Jedem dieser Werkzeughalter sind zwei Antriebseinheiten zugeordnet.

Es ist ebenfalls möglich, die Antriebseinheiten an den Seitenträgern des Rahmengestells anzubringen. Diese Möglichkeit der Montage der Antriebseinheit würde zum Beispiel genutzt, wenn zwei Werkzeughalter mit den zwei ihnen zugeordneten Antriebseinheiten in einer Handhabungseinheit eingebaut werden sollen. In diesem Fall würden die Antriebseinheiten des zweiten Werkzeughalters an den zusätzlichen Schienen innerhalb des Rahmengestells angelenkt. Die Antriebseinheiten des ersten Werkzeughalters werden an den Seitenträgern des Rahmengestells fixiert.

Die Werkzeughalter der Handhabungseinrichtung sind derart ausgestaltet, dass an ihnen verschiedene Werkzeuge austauschbar halterbar sind. Diese Werkzeuge können z. B. Saugeinrichtungen, Greifer, auf den Werkzeughalter drehbewegliche und/oder verfahrbare Greifer etc. sein. Aus dem Stand der Technik sind verschiedene Werkzeuge zum Handhaben von Gütern bekannt. Weiterhin ist bekannt, dass die Werkzeuge in verschiedenen Arten auf und/oder um den Werkzeughalter beweglich ausgestaltet sein können. Für den Fachmann ist klar, dass die Werkzeuge je nach den zu bewegenden Gütern angepasst werden müssen. Die hier aufgezählten Greifertypen und die Bewegungsarten der Werkzeuge stellen somit keine abschließende Beschränkung der Erfindung dar.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine perspektivische Teilansicht des Aufbaus der erfindungsgemäßen Handhabungseinrichtung.
Figur 2 zeigt den schematischen Aufbau einer Antriebseinheit gemäß dem Stand der Technik.
Figur 3 zeigt eine Explosionszeichnung des Rahmengestells der Handhabungseinrichtung.
Figur 4 zeigt einen schematischen Aufbau der Handhabungseinrichtung mit zwei Motoren und einem Werkzeughalter in Draufsicht.
Figur 5 zeigt einen schematischen Aufbau der Handhabungseinrichtung mit vier Motoren und einem Werkzeughalter in Draufsicht.
Figur 6 zeigt einen Teil einer Handhabungseinheit mit zwei Antriebseinheiten sowie mit einem Werkzeughalter in Draufsicht.
Figur 7 zeigt eine Handhabungseinheit mit vier Antriebseinheiten und zwei Werkzeughaltern in Draufsicht.
Figur 8 zeigt eine Handhabungseinrichtung mit einem Werkzeughalter und drei Motoren in Draufsicht.
Figur 9 zeigt die Handhabungseinrichtung der Figur 7 mit nur sechs Antriebsmotoren in Draufsicht.
Figur 10 zeigt eine Handhabungseinrichtung mit einem Werkzeughalter in einer Frontalansicht.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Handhabungseinrichtung ausgestaltet sein kann und stellen keine abschließende Begrenzung der Erfindung dar.

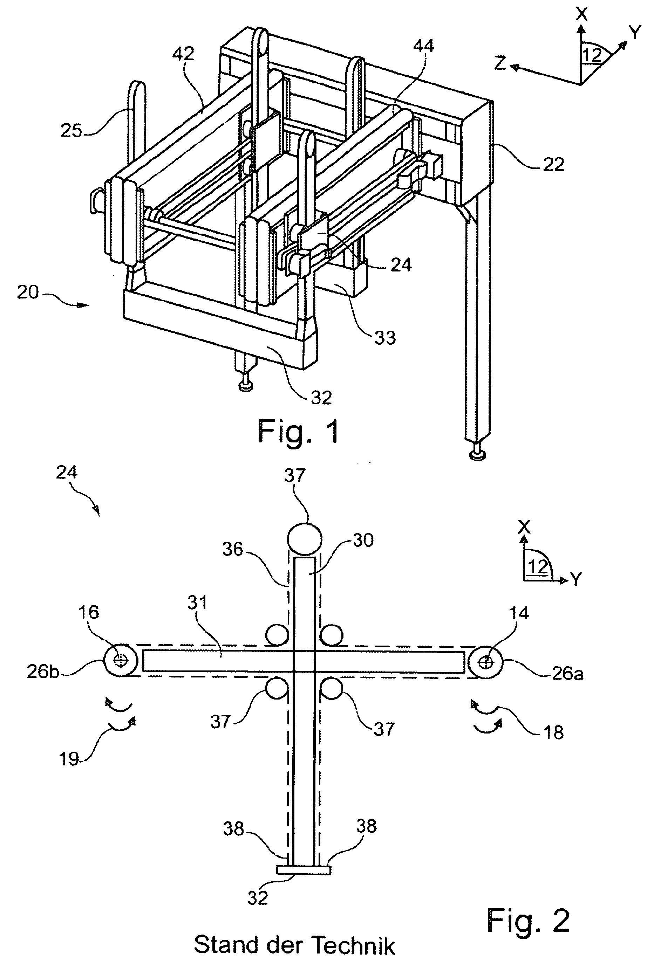

Figur 1 zeigt eine perspektivische Teilansicht des Aufbaus der erfindungsgemäßen Handhabungseinrichtung 20. Die Grundstruktur der Handhabungseinrichtung 20 bildet das Rahmengestell 22. An dem Rahmengestell 22 sind die Schienen 42 und 44 zur Aufnahme der ersten Antriebseinheit 24 und der zweiten Antriebseinheit 25 angelenkt. Mit den Antriebseinheiten 24 und 25 wird der erste Werkzeughalter 32 gehaltert und bewegt. Desweiteren zeigt die Figur 1 einen zweiten Werkzeughalter 33. Der Aufbau des zweiten Werkzeughalters 33 ist mit dem des ersten Werkzeughalters 32 identisch. Durch eine gezielte Steuerung der Antriebseinheiten 24 und 25 ist es möglich, den ersten Werkzeughalter 32 in den Richtungen X und Y zu bewegen. Die Richtungen X und Y stehen in dem Winkel 12 zueinander. In der bevorzugten Ausführungsform beträgt der Winkel 12 90°. Für den Fachmann ist klar, dass es je nach Ausgestaltung der Handhabungseinrichtung 20 möglich ist, die Bewegungen des Werkzeughalters 32 auch in einem anderen Winkel 12 als 90° zu bewegen.

Für den Fachmann ist weiterhin klar, dass es möglich ist, den zweiten Werkzeughalter 33 ebenfalls derart zu steuern, dass er in den Richtungen X und Y bewegt werden kann.

Figur 2 zeigt den schematischen Aufbau einer Antriebseinheit 24 gemäß dem Stand der Technik. Die Antriebseinheit 24 besteht aus einem vertikalen Träger 30 und einem horizontalen Träger 31. Entlang dieser Träger 30 und 31 ist der Werkzeughalter 32 in der ersten Richtung X und in der zweiten Richtung Y beweglich. Die erste Richtung X und die zweite Richtung Y sind im Winkel 12 zueinander ausgerichtet. An dem horizontalen Träger 31 sind der erste Motor 26a und der zweite Motor 26b angelenkt. Der erste Motor 26a erzeugt eine Drehbewegung um die erste Drehachse 14 und der zweite Motor 26b erzeugt eine Drehbewegung um die zweite Drehachse 16. Diese Drehbewegungen werden mit dem flexiblen Element 36 zur Bewegung des Werkzeughalters 32 auf denselben übertragen. Das flexible Element 36 ist über die Befestigungen 38 fest mit der Antriebseinheit 24 verbunden. Das flexible Element 36 ist über mehrere Umlenkrollen entlang der äußeren Kontur der Antriebseinheit 24 geführt. Durch diese Führung kann die Bewegung der Antriebseinheit 24 in die zwei Raumrichtungen erzielt werden.

Durch das Drehen des ersten Motors 26a und des zweiten Motors 26b in der ersten Drehrichtung 18 oder in der zweiten Drehrichtung 19, mit jeweils gleicher Drehzahl, wird der vertikale Träger 31 in der zweiten Richtung Y bewegt. Wird der erste Motor 26a in der ersten Drehrichtung 18 und der zweite Motor 26b in der zweiten Drehrichtung 19 mit jeweils gleicher Drehzahl gedreht, wird der vertikale Träger 30 in der ersten Richtung X bewegt. Durch eine geeignete Kombination von unterschiedlichen oder gleichen Drehrichtungen 18 und 19 sowie der Drehzahl, durch die der erste Motor 26a und der zweite Motor 26b betrieben werden, ist es möglich, den Werkzeughalter 32 an jede beliebige Stelle der Handhabungseinrichtung 20 zu fahren.

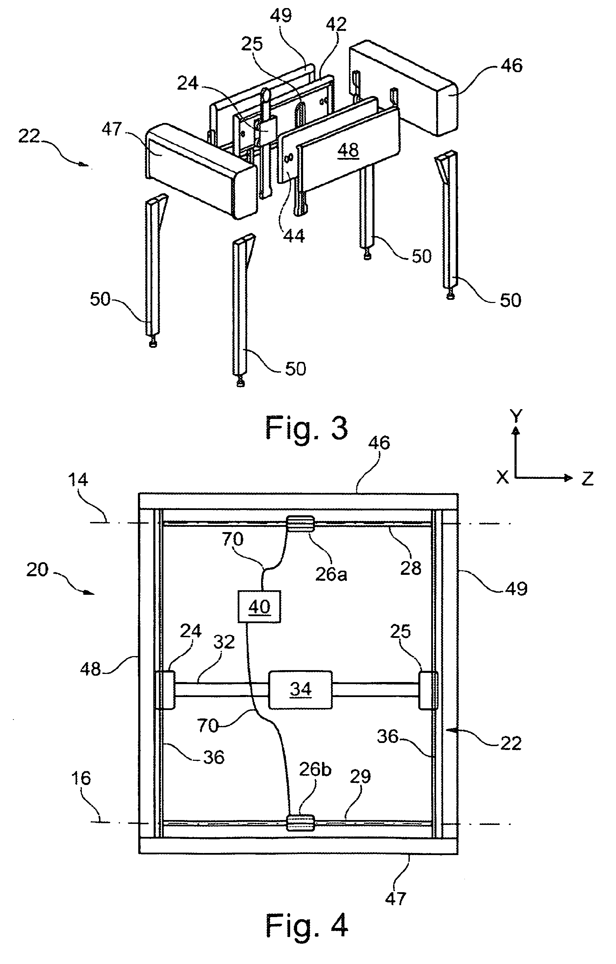

Figur 3 zeigt eine Explosionszeichnung des Rahmengestells 22. Das Rahmengestell 22 besteht aus einem ersten Hauptträger 46 und einem zweiten Hauptträger 47, an denen der erste Seitenträger 48 und der zweite Seitenträger 49 angelenkt sind. Weiterhin sind an dem ersten Hauptträger 46 und an den zweiten Hauptträger 47 jeweils zwei Beine 50 befestigt. Zwischen dem ersten Seitenträger 48 und dem zweiten Seitenträger 49 können die erste Schiene 42 zur Befestigung der ersten Antriebseinheit 24 und die zweite Schiene 44 zur Befestigung der zweiten Antriebseinheit 25 angeordnet sein.

Figur 4 zeigt eine Handhabungseinrichtung 20 mit einem ersten Motor 26a und einem zweiten Motor 26b und mit einem Werkzeughalter 32 in einer Draufsicht. Das Rahmengestell 22 besteht aus dem ersten Hauptträger 46 und dem zweiten Hauptträger 47 sowie aus dem ersten Seitenträger 48 und dem zweiten Seitenträger 49. An dem ersten Seitenträger 48 ist die erste Antriebseinheit 24 mit einem zugehörigen flexiblen Element 36 angelenkt. An dem zweiten Seitenträger 49 ist die zweite Antriebseinheit 25 mit dem dazugehörigen flexiblen Element 36 angelenkt. Die erste und die zweite Antriebseinheit 24 und 25 werden von dem ersten Motor 26a und von dem zweiten Motor 26b angetrieben. Der erste Motor 26a ist über die erste Welle 28 mit der ersten Antriebseinheit 24 und mit der zweiten Antriebseinheit 25 verbunden. Die erste Welle 28 ist koaxial um die erste Drehachse 14 angeordnet. Der zweite Motor 26b ist über die zweite Welle 29 mit der ersten und zweiten Antriebseinrichtung 24 und 25 verbunden. Die zweite Welle 29 ist ebenfalls koaxial um die zweite Drehachse 16 angeordnet. Dadurch, dass die erste Antriebseinheit 24 und die zweite Antriebseinheit 25 mit dem ersten Motor 26a und dem zweiten Motor 26b über die erste Welle 28 bzw. über die zweite Welle 29 verbunden sind, bewegen sich die beiden Antriebseinheiten 24 und 25 synchron. Zum Steuern des ersten Motors 26a und des zweiten Motors 26b sind diese über Kabel 70 mit einer Einrichtung 40 verbunden. Durch die Einrichtung 40 wird die Drehzahl und/oder die Drehrichtung der beiden Motoren 26a und 26b derart geregelt, dass der Werkzeughalter 34 an jede beliebige Position innerhalb der Handhabungseinrichtung 20 verfahren werden kann.

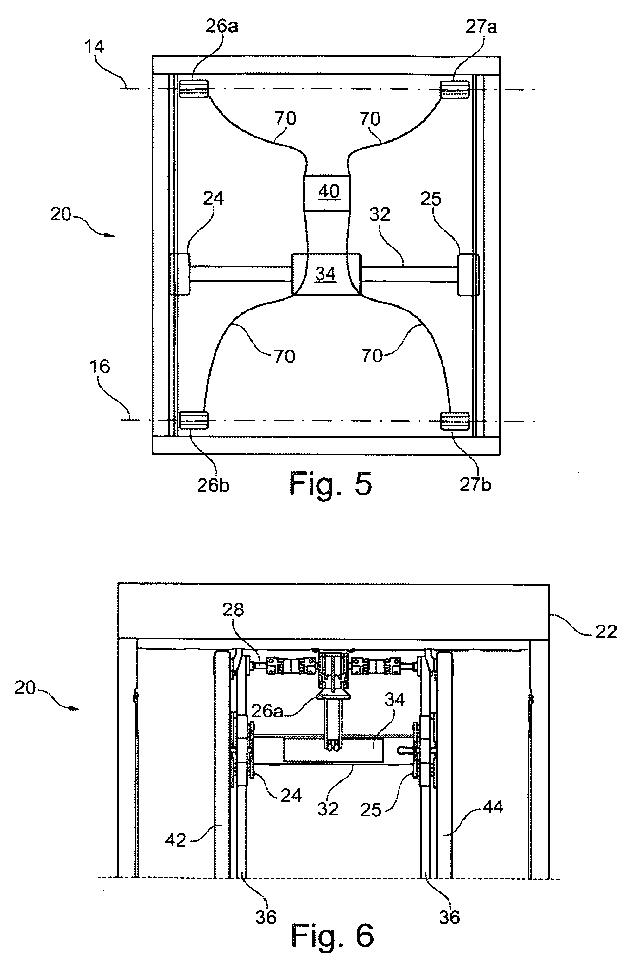

Figur 5 zeigt den schematischen Aufbau einer Handhabungseinrichtung 20 mit vier Motoren 26a, 26b, 27a und 27b und mit einem Werkzeughalter 32 in einer Draufsicht. Der erste Motor 26a und der dritte Motor 27a bilden ein erstes Motorenpaar, mit dem die erste Antriebseinheit 24 angetrieben wird. Die zweite Antriebseinheit 25 wird von einem zweiten Motorenpaar angetrieben, welches von dem zweiten Motor 26b und dem vierten Motor 27b gebildet wird. Die jeweilige Antriebsachse (nicht dargestellt) des ersten Motors 26a und des dritten Motors 27a ist entlang der ersten Drehachse 14 ausgerichtet. Die jeweilige Antriebsachse (nicht dargestellt) des zweiten Motors 26b und des vierten Motors 27b ist entlang der zweiten Drehachse 16 ausgerichtet. Die Synchronisation und die Steuerung der vier Motoren 26a, 26b, 27a und 27b erfolgt mittels der Einrichtung 40, die über Kabel 70 mit jedem einzelnen Motor 26a, 26b, 27a und 27b verbunden ist. Der Werkzeughalter 32, an dem das Werkzeug 34 angeordnet ist, ist an der ersten Antriebseinheit 24 und an der zweiten Antriebseinheit 25 angelenkt.

In der Figur 6 wird ein Teil einer Handhabungseinheit 20 mit zwei Antriebseinheiten 24 und 25, sowie mit einem Werkzeughalter 32 gezeigt. Die erste Antriebseinheit 24 ist an einer ersten Schiene 42 angelenkt. Die zweite Antriebseinheit 25 ist an einer zweiten Schiene 44 angelenkt. Die erste Schiene 42 und die zweite Schiene 44 sind mit dem Rahmengestell 22 fest verbunden. Die erste Antriebseinheit 24 und die zweite Antriebseinheit 25 verfügen jeweils über ein flexibles Element 36 und sind über die erste Welle 28 mit dem ersten Motor 26a verbunden. Der erste Werkzeughalter 32 mit dem Werkzeug 34 wird von der ersten Antriebseinheit 24 und der zweiten Antriebseinheit 25 gehaltert und kann mit diesen bewegt werden.

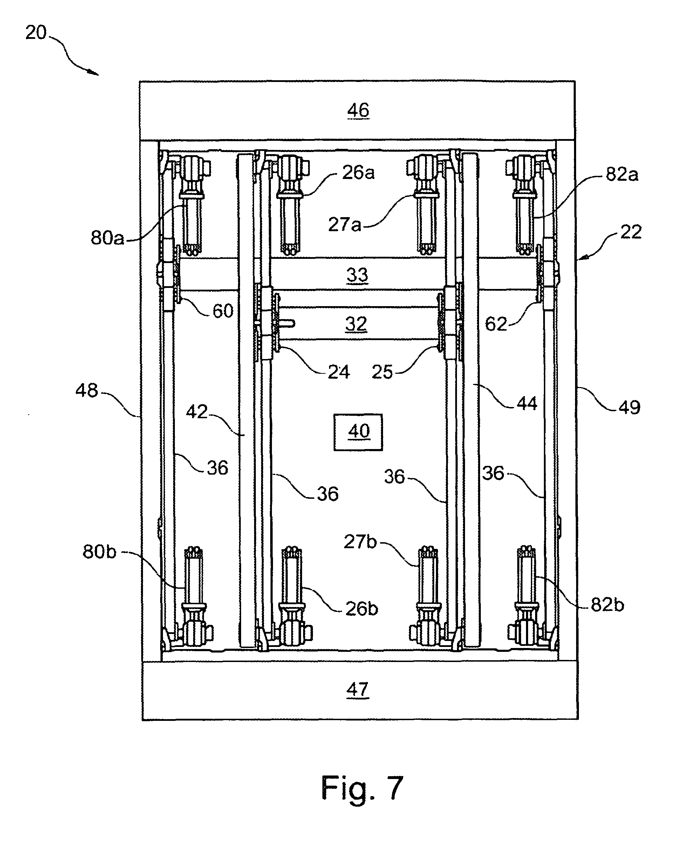

Figur 7 zeigt einen Teil einer Handhabungseinheit 20 mit vier Antriebseinheiten 24, 25, 60, 62 und zwei Werkzeughaltern 32 und 33. Der erste Werkzeughalter 32 ist an der ersten Antriebseinheit 24 und an der zweiten Antriebseinheit 25 angelenkt. Die Bewegung des ersten Werkzeughalters 32 erfolgt über das jeweilige flexible Element 36 der ersten Antriebseinheit 24 und der zweiten Antriebseinheit 25. Die erste Antriebseinheit 24 wird von dem ersten Motor 26a und dem zweiten Motor 26b angetrieben. Die zweite Antriebseinheit 25 wird von dem dritten Motor 27a und dem vierten Motor 27b angetrieben. Die erste Antriebseinheit 24 ist an der ersten Schiene 42 und die zweite Antriebseinheit 25 an der zweiten Schiene 44 fixiert. Die erste Schiene 42 und die zweite Schiene 44 sind an dem ersten Hauptträger 46 und an dem zweiten Hauptträger 47 des Rahmengestells 22 angelenkt.

Der zweite Werkzeughalter 33 ist an der dritten Antriebseinheit 60 und an der vierten Antriebseinheit 62 angelenkt. Die Bewegung des zweiten Werkzeughalters 33 erfolgt über die jeweiligen flexiblen Elemente 36 der dritten Antriebseinheit 60 und der vierten Antriebseinheit 62. Die dritte Antriebseinheit 60 wird von dem fünften Motor 80a und von dem sechsten Motor 80b angetrieben. Die vierte Antriebseinheit 62 wird von dem siebten Motor 82a und dem achten Motor 82b angetrieben. Die dritte Antriebseinheit 60 ist an dem ersten Seitenträger 48 und die vierte Antriebseinheit 62 an dem zweiten Seitenträger 49 fixiert.

Mit der Einrichtung 40 werden der erste Motor 26a und der dritte Motor 27a synchronisiert. Weiterhin synchronisiert die Einheit 40 den zweiten Motor 26b und den vierten Motor 27b. Um den ersten Werkzeughalter 32 zu steuern, werden von der Einheit 40 das erste Motorenpaar 26a und 27a sowie das zweite Motorenpaar 26b und 27b gesteuert. Um den zweiten Werkzeughalter 33 zu bewegen, werden der fünfte Motor 80a und der siebte Motor 82a mit der Einheit 40 synchronisiert. Weiterhin synchronisiert die Einheit 40 den sechsten Motor 80b und den achten Motor 82b. Um auch den zweiten Werkzeughalter 33 gezielt zu bewegen, werden von der Einheit 40 das dritte Motorenpaar 80a und 82a sowie das vierte Motorenpaar 80b und 82b gesteuert.

Auch die Steuerung, durch die der erste Werkzeughalter 32 und der zweite Werkzeughalter 33 gemeinsam in der Handhabungseinrichtung 20 betrieben werden können, erfolgt mittels der Einheit 40. Um die Darstellung der Figur 7 nicht zu unübersichtlich werden zu lassen, wurde auf die Darstellung der Kabel 70, die die Einheit 40 mit den einzelnen Motoren 26a, 26b, 27a, 27b, 80a, 80b, 82a und 82b verbindet, verzichtet. Für den Fachmann ist klar, dass diese Kabel 70 in einer funktionsfähigen Handhabungseinrichtung 20 vorhanden sein müssen. Weiterhin ist es für den Fachmann klar, dass es auch möglich ist, den ersten Werkzeughalter 32, wie in der Figur 4 dargestellt, derart zu betreiben, dass er von zwei Motoren 26a und 26b angetrieben wird, die jeweils über eine Welle mit der ersten Antriebseinheit 24 und der zweiten Antriebseinheit 25 verbunden sind.

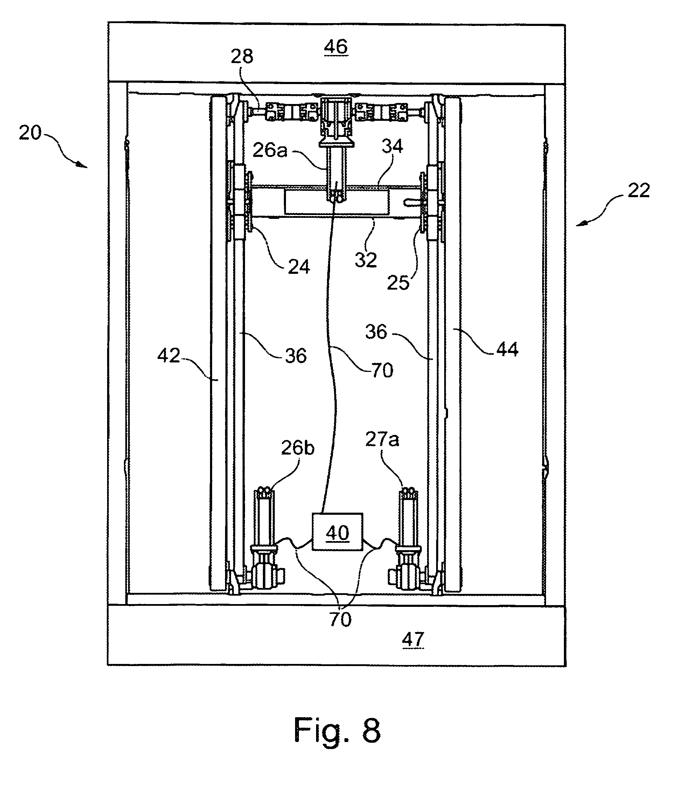

In der Figur 8 ist eine Handhabungseinrichtung 20 mit einem Werkzeughalter 32 und drei Motoren 26a und 26b und 27a in einer Draufsicht dargestellt. Der Werkzeughalter 32, ist an der ersten Antriebseinheit 24 und an der zweiten Antriebseinheit 25 angelenkt. An dem Werkzeughalter 32 ist das Werkzeug 34 gehaltert. Die erste Antriebseinheit 24 ist an der ersten Schiene 42 und die zweite Antriebseinheit 25 ist an der zweiten Schiene 44 angelenkt. Die erste und die zweite Schiene 42 und 44 sind an dem ersten Hauptträger 46 und an dem zweiten Hauptträger 44 des Rahmengestells 22 angebracht.

Die erste und die zweite Antriebseinheit 24 und 25 verfügen jeweils über ein flexibles Element 36, mit welchem die Bewegungen vom ersten Motor 26a, vom zweiten Motor 26b und vom dritten Motor 27a an den Werkzeughalter 32 übertragen werden.

In der in der Figur 8 dargestellten Ausführungsform werden die erste und die zweite Antriebseinheit 24 und 25 an der dem ersten Hauptträger 46 zugewanden Seite von einem ersten Motor 26a angetrieben. Die erste und die zweite Antriebseinheit 24 und 25 sind über eine erste Welle 28 mit dem ersten Motor 26a verbunden. An der dem zweiten Hauptträger 47 zugewanden Seite werden die erste Antriebseinheit 24 und die zweite Antriebseinheit 25 von jeweils einem Motor angetrieben. Die erste Antriebseinheit 24 wird von dem zweiten Motor 26b und die zweite Antriebseinheit 25 von dem dritten Motor 27a angetrieben. Um die Bewegungen der ersten Antriebseinheit 24 und der zweiten Antriebseinheit 25 zu synchronisieren und zu steuern, sind der erste Motor 26a, der zweite Motor 26b und der dritte Motor 26c über Kabel 70 mit einer Einrichtung 40 verbunden. Die Einheit 40 synchronisiert den zweiten Motor 26b und den dritten Motor 27a derart miteinander, dass die erste Antriebseinheit 24 und die zweite Antriebseinheit 25 immer synchron laufen. Weiterhin steuert die Einheit 70 die Bewegungsrichtungen des ersten Motors 26a mit dem Motorenpaar aus dem zweiten Motor 26b und dem dritten Motor 27a, so dass auch diese die erste Antriebseinheit 24 und die zweite Antriebseinheit 25 immer in die gleiche Bewegungsrichtung bewegen.

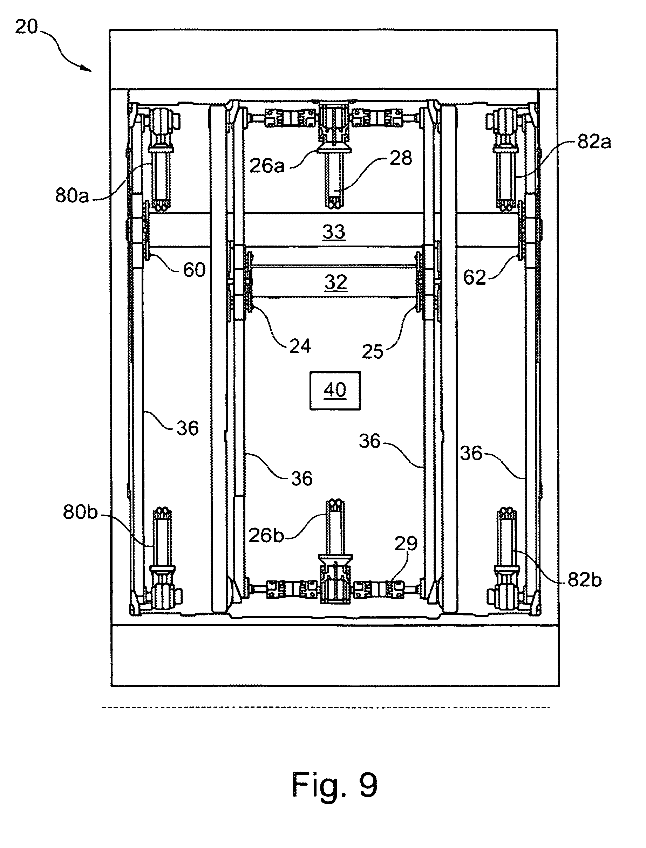

Die Figur 9 zeigt die Handhabungseinrichtung 20 der Figur 7 mit sechs Motoren 26a, 26b, 80a, 80b, 82a und 82b in Draufsicht. Der Aufbau der Handhabungseinrichtung 20 und die Befestigung des ersten Werkzeughalters 32 und des zweiten Werkzeughalters 33 sowie die Befestigung der Antriebseinheiten 24, 25, 60 und 62 ist in Figur 7 beschrieben. In der Figur 9 ist ein erster Werkzeugträger 32 dargestellt, der über flexible Elemente 36 von der ersten und der zweiten Antriebseinheit 24 und 25 angetrieben wird. Die erste Antriebseinheit 24 und die zweite Antriebseinheit 25 werden von dem ersten Motor 26a und dem zweiten Motor 26b angetrieben. Der erste Motor 26a ist über eine erste Welle 28 mit der ersten und der zweiten Antriebseinheit 24 und 25 verbunden. Der zweite Motor 26b ist über eine zweite Welle 29 mit der ersten und der zweiten Antriebseinheit 24 und 25 verbunden. Durch die Einrichtung 40 wird die Bewegung des ersten Motors 26a und des zweiten Motors 26b gesteuert.

Um den zweiten Werkzeughalter 33 zu bewegen, werden der fünfte Motor 80a und der siebte Motor 82a mit der Einheit 40 synchronisiert. Weiterhin synchronisiert die Einheit 40 den sechsten Motor 80b und den achten Motor 82b. Um auch den zweiten Werkzeughalter 33 gezielt zu bewegen, werden von der Einheit 40 das dritte Motorenpaar aus dem fünften Motor 80a und dem sechsten Motor 82a sowie das vierte Motorenpaar aus dem sechsten Motor 80b und dem achten Motor 82b gesteuert.

Auch die Steuerung, durch die der erste Werkzeughalter 32 und der zweite Werkzeughalter 33 gemeinsam in der Handhabungseinrichtung 20 betrieben werden können, erfolgt mittels der Einheit 40. Genau wie in der Figur 7, wird auch in der Figur 9 auf die Darstellung der Kabel 70, die die Einheit 40 mit den sechs Motoren 26a, 26b, 80a, 80b, 82a und 82b, zu Gunsten einer besseren Übersichtlichkeit der Figur 9 verzichtet.

Für den Fachmann ist klar, dass es möglich ist, die Motoren 26a, 26b, 80a, 80b, 82a und 82b in verschiedenen Größen auszuwählen. Je nach Gewicht der zu bewegenden Güter und nach Ausgestaltung der Werkzeughalter 32 und 33 werden Motoren mit unterschiedlichen Antriebsleistungen benötigt. Weiterhin ist klar, dass der erste Motor 26a und der zweite Motor 26b größer dimensioniert sein müssen, als die Motoren 80a, 80b, 80c und 80d.

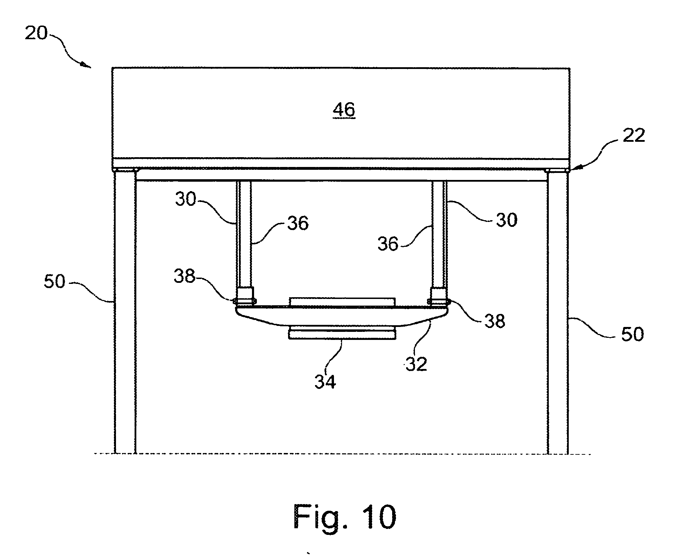

In der Figur 10 ist eine Handhabungseinrichtung 20 mit einem Werkzeughalter 32 in einer Frontalansicht dargestellt. Aus dieser Ansicht sind zwei Beine 50 und der Hauptträger 46 des Rahmengestells 22 zu erkennen. Weiterhin ist der erste Werkzeughalter 32 mit dem Werkzeug 34 dargestellt. Der erste Werkzeughalter 32 ist mittels der Befestigungen 38 mit den zwei vertikalen Trägern 30 der ersten Antriebseinheit 24 bzw. der zweiten Antriebseinheit 25 verbunden. Die flexiblen Elemente 36 der ersten Antriebseinheit 24 bzw. der zweiten Antriebseinheit 25 sind an den Befestigungen 38 fixiert.

Für den Fachmann ist klar, dass in einer erfindungsgemäßen Handhabungseinrichtung mehr als zwei Werkzeughalter mit diesen zugeordneten Werkzeugen angeordnet sein können. Hierbei ist es unerheblich, in welcher Art die zusätzlichen Handhabungseinrichtungen ausgestaltet sind. Es ist zum Beispiel denkbar, einen erfindungsgemäßen Werkzeughalter mit zwei Antriebseinheiten mit einem aus dem Stand der Technik bekannten Werkzeughalter zu kombinieren, ohne den Schutzbereich der Erfindung zu verlassen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Güter
- 12: Winkel
- 14: erste Drehachse
- 16: zweite Drehachse
- 17: dritte Drehachse
- 18: erste Drehrichtung
- 19: zweite Drehrichtung
- 20: Handhabungseinrichtung
- 22: Rahmengestell
- 24: erste Antriebseinheit
- 25: zweite Antriebseinheit
- 26a: erster Motor
- 26b: zweiter Motor
- 27a: dritter Motor
- 27b: vierter Motor
- 28: erste Welle
- 29: zweite Welle
- 30: vertikaler Träger
- 31: horizontaler Träger
- 32: erster Werkzeughalter
- 33: zweiter Werkzeughalter
- 34: Werkzeug
- 36: flexibles Element
- 37: Umlenkrolle
- 38: Befestigung
- 40: Einrichtung
- 42: erste Schiene
- 44: zweite Schiene
- 46: erster Hauptträger
- 47: zweiter Hauptträger
- 48: erster Seitenträger
- 49: zweiter Seitenträger
- 50: Beine
- 60: dritter Antriebseinheit
- 62: vierter Antriebseinheit
- 70: Kabel
- 80a: fünfter Motor
- 80b: sechster Motor
- 82a: siebter Motor
- 82b: achter Motor

- X: erste Richtung
- Y: zweite Richtung
- Z: dritte Richtung

## Patentansprüche

1. Handhabungseinrichtung (20) zum Bewegen von Gütern (10), mit einer ersten Antriebseinheit (24), die mindestens einen Werkzeughalter (32) besitzt, der in zwei in einem Winkel (12) zueinander stehenden Richtungen (X, Y) mittels zweier ortsfester Drehachsen (14, 16) in Verbindung mit einem flexiblen, bandförmigen Element (36) bewegbar ist, **dadurch gekennzeichnet, dass** dem mindestens einen Werkzeughalter (32) eine zweite Antriebseinheit (25) derart zugeordnet ist, dass der mindestens eine Werkzeughalter (32) zwischen der ersten Antriebseinheit (24) und der zweiten Antriebseinheit (25) gehaltert ist.

2. Handhabungseinrichtung (20) nach Anspruch 1, wobei die erste und die zweite Antriebseinheit (24, 25) jeweils über mindestens einen ersten Motor (26a) und über mindestens einen zweiten Motor (26b) antreibbar sind.

3. Handhabungseinrichtung (20) nach Anspruch 2, wobei die Handhabungseinrichtung (20) einen ersten und einen zweiten Motor (26a, 26b) besitzt, die derart angeordnet sind, dass die ortsfesten Drehachsen (14, 16) der ersten und der zweiten Antriebseinheit (24, 25) über eine gemeinsame erste Welle (28) und eine gemeinsame zweite Welle (29) miteinander verbunden sind, wobei die erste Welle (28) über den ersten Motor (26a) und die zweite Welle (29) über den zweiten Motor (26b) antreibbar sind.

4. Handhabungseinrichtung (20) nach Anspruch 3, wobei der erste Motor (26a) und der zweite Motor (26b) über eine Einrichtung (40) hinsichtlich ihrer Drehzahl und Drehrichtung steuerbar sind, dass der mindestens eine Werkzeughalter (32) in zwei in einem Winkel (12) zueinander stehenden Richtungen (X, Y) bewegbar ist.

5. Handhabungseinrichtung (20) nach Anspruch 2, wobei die Handhabungseinrichtung (20) einen ersten, einen zweiten und einen dritten Motor (26a, 26b, 27b) besitzt, die derart angeordnet sind, dass die erste ortsfeste Drehachse (14) der ersten und der zweiten Antriebseinheit (24, 25) über eine gemeinsame erste Welle (28) miteinander verbunden ist und die erste Welle (28) über den ersten Motor (26a) antreibbar ist, dass auf die zweite ortsfeste Drehachse (16) der zweite und der dritte Motor (26b, 27b) einwirken, so dass die erste Antriebseinheit (24) über den zweiten Motor (26b) und die zweite Antriebseinheit (25) über den dritten Motor (27b) antreibbar sind.

6. Handhabungseinrichtung (20) nach Anspruch 5, wobei der erste Motor (26a) und das Motorenpaar aus dem zweiten Motor (26b) und dem dritten Motor (27b) über eine Einrichtung (40) derart steuerbar sind und wobei der zweite Motor (26b) und der dritte Motor (27b) derart mit der Einrichtung (40) synchronisierbar sind, dass der mindestens eine Werkzeughalter (32) in zwei in einem Winkel (12) zueinander stehenden Richtungen (X, Y) bewegbar ist.

7. Handhabungseinrichtung (20) nach Anspruch 2, wobei die Handhabungseinrichtung (20) einen ersten, einen zweiten, einen dritten und einen vierten Motor (26a, 26b, 27b, 27a) besitzt, wobei der erste Motor (26a) und der zweite Motor (26b) auf die erste ortsfeste Drehachse (14) bzw. auf die zweite ortsfeste Drehachse (16) einwirken und wobei der dritte Motor (27b) und der vierte Motor (27a) auf die zweite ortsfeste Drehachse (16) bzw. auf die erste ortsfeste Drehachse (14) einwirken, so dass über die erste Antriebseinheit (24) der erste Motor (26a) und der zweite Motor (26b) antreibbar sind und dass die zweite Antriebseinheit (25) über den vierten Motor (27a) und den dritten Motor (27b) antreibbar ist.

8. Handhabungseinrichtung (20) nach Anspruch 7, wobei eine Einrichtung (40) vorgesehen ist, die jeweils den ersten Motor (26a) und den vierten Motor (27a) des ersten Motorenpaares und den zweiten Motor (26b) und den dritten Motor (27b) des zweiten Motorenpaares synchronisiert und den ersten Motor (26a) und den vierten Motor (27a) des ersten Motorenpaares und den zweiten Motor (26b) und den dritten Motor (27b) des zweiten Motorenpaares hinsichtlich ihrer Drehzahl und Drehrichtung derart steuert, dass der mindestens eine Werkzeughalter (32) in zwei in einem Winkel (12) zueinander stehenden Richtungen (X, Y) bewegbar ist.

9. Handhabungseinrichtung (20) nach einem der Ansprüche 1 bis 8, wobei jede der zwei Antriebseinheiten (24, 25) des mindestens einen Werkzeughalters (32) an jeweils einer ersten Schiene (42) und einer zweiten Schiene (44) gehaltert sind.

10. Handhabungseinrichtung (20) nach Anspruch 9, wobei die erste und zweite Schiene (42,44) an einem Rahmengestell (22) der Handhabungseinheit (20) angelenkt sind.

11. Handhabungseinrichtung (20) nach einem der Ansprüche 1 bis 10, wobei die Handhabungseinrichtung (20) mindestens zwei Werkzeughalter (32, 33) trägt, denen jeweils zwei Antriebseinheiten (24, 25, 60, 62) zugeordnet sind.

## Claims

1. A handling apparatus (20) for moving goods (10), with a first drive unit (24) which has at least one tool holder (32) which can be moved in two directions (X, Y) which are at an angle (12) to one another by means of two fixed rotational axes (14, 16) in connection with a flexible strip-like element (36), **characterised in that** a second drive unit (25) is assigned to the at least one tool holder (32) in such a manner that the at least one tool holder (32) is held between the first drive unit (24) and the second drive unit (25).

2. The handling apparatus (20) according to Claim 1, wherein the first and the second drive units (24, 25) can in each case be driven via at least one first motor (26a) and via at least one second motor (26b).

3. The handling apparatus (20) according to Claim 2, wherein the handling apparatus (20) has a first and a second motor (26a, 26b) which are arranged such that the fixed rotational axes (14, 16) of the first and the second drive units (24, 25) are connected to one another via a common first shaft (28) and a common second shaft (29), wherein the first shaft (28) can be driven via the first motor (26a) and the second shaft (29) can be driven via the second motor (26b).

4. The handling apparatus (20) according to Claim 3, wherein the first motor (26a) and the second motor (26b) can be controlled via an apparatus (40) with respect to their speed and direction of rotation, such that the at least one tool holder (32) can be moved in two directions (X, Y) which are at an angle (12) to one another.

5. The handling apparatus (20) according to Claim 2, wherein the handling apparatus (20) has a first, a second and a third motor (26a, 26b, 27b) which are arranged such that the first fixed rotational axes (14) of the first and the second drive units (24, 25) are connected to one another via a common first shaft (28), and the first shaft (28) can be driven via the first motor (26a), and that the second and the third motors (26b, 27b) act on the second fixed rotational axis (16), so that the first drive unit (24) can be driven via the second motor (26b) and the second drive unit (25) can be driven via the third motor (27b).

6. The handling apparatus (20) according to Claim 5, wherein the first motor (26a) and the motor pair made up of the second motor (26b) and the third motor (27b) can be controlled via an apparatus (40) in such a manner and wherein the second motor (26b) and the third motor (27b) can be synchronised in such a manner with the apparatus (40) that the at least one tool holder (32) can be moved in two directions (X, Y) which are at an angle (12) to one another.

7. The handling apparatus (20) according to Claim 2, wherein the handling apparatus (20) has a first, a second, a third and a fourth motor (26a, 26b, 27b, 27a), wherein the first motor (26a) and the second motor (26b) act on the first fixed rotational axis (14) or on the second fixed rotational axis (16), and wherein the third motor (27b) and the fourth motor (27a) act on the second fixed rotational axis (16) or on the first fixed rotational axis (14) so that the first motor (26a) and the second motor (26b) can be driven via the first drive unit (24) and that the second drive unit (25) can be driven via the fourth motor (27a) and the third motor (27b).

8. The handling apparatus (20) according to Claim 7, wherein an apparatus (40) is provided, which in each case synchronises the first motor (26a) and the fourth motor (27a) of the first motor pair and the second motor (26b) and the third motor (27b) of the second motor pair and controls the first motor (26a) and the fourth motor (26b) of the first motor pair and the second motor (26b) and the third motor (27b) of the second motor pair with respect to their speed and direction of rotation in such a manner that the at least one tool holder (32) can be moved in two directions (X, Y) which are at an angle (12) to one another.

9. The handling apparatus (20) according to any one of Claims 1 to 8, wherein each of the two drive units (24, 25) of the at least one tool holder (32) are held at a first rail (42) and a second rail (44) in each case.

10. The handling apparatus (20) according to Claim 9, wherein the first and second rails (42, 44) are linked to a frame (22) of the handling unit (20).

11. The handling apparatus (20) according to any one of Claims 1 to 10, wherein the handling apparatus (20) carries at least two tool holders (32, 33), to which at least two drive units (24, 25, 60, 62) are assigned respectively.

## Revendications

1. Equipement de maniement (20) pour le déplacement de marchandises (10), avec une première unité d'entraînement (24) qui possède au moins un porte-outil (32) qui peut être déplacé dans deux directions (X, Y) formant un angle (12) l'une par rapport à l'autre au moyen de deux axes de rotation (14, 16) stationnaires en combinaison avec un élément (36) flexible et en forme de bande, **caractérisé en ce qu'**est affecté au au moins un porte-outil (32) une deuxième unité d'entraînement (25) de manière à ce que le au moins un porte-outil (32) soit supporté entre la première unité d'entraînement (24) et la deuxième unité d'entraînement (25).

2. Equipement de maniement (20) selon la revendication 1, dans lequel la première et la deuxième unité d'entraînement (24, 25) peuvent respectivement être entraînées par l'intermédiaire d'au moins un premier moteur (26a) et par l'intermédiaire d'au moins un deuxième moteur (26b).

3. Equipement de maniement (20) selon la revendication 1, étant donné que l'équipement de maniement (20) possède un premier et un deuxième moteurs (26a, 26b) qui sont disposés de manière à ce que les axes de rotation stationnaires (14, 16) de la première et de la deuxième unité d'entraînement (24, 25) soient reliés l'un à l'autre par l'intermédiaire d'un premier arbre commun (28) et d'un deuxième arbre commun (29), étant donné que le premier arbre (28) peut être entraîné par le premier moteur (26a) et le deuxième arbre (29) peut être entraîné par le deuxième moteur (26b).

4. Equipement de maniement (20) selon la revendication 3, dans lequel le premier moteur (26a) et le deuxième moteur (26b) peuvent être commandés quant à leurs vitesses de rotation et leurs sens de rotation par l'intermédiaire d'un équipement (40), **caractérisé en ce que** le au moins un porte-outil (32) peut être déplacé dans deux directions (X, Y) formant un angle (12) l'une par rapport à l'autre.

5. Equipement de maniement (20) selon la revendication 2, étant donné que l'équipement de maniement (20) possède un premier, un deuxième et un troisième moteurs (26a, 26b, 27b) qui sont disposés de manière à ce que le premier axe de rotation stationnaire (14) de la première et de la deuxième unité d'entraînement (24, 25) soit relié par un premier arbre commun (28) et le premier arbre (28) puisse être entraîné par le premier moteur (26a), **caractérisé en ce que** le deuxième et le troisième moteur (26b, 27b) agissent sur le deuxième axe de rotation stationnaire (16) de manière à ce que la première unité d'entraînement (24) puisse être entraînée par le deuxième moteur (26b) et la deuxième unité d'entraînement (25) puisse être entraînée par le troisième moteur (27b).

6. Equipement de maniement (20) selon la revendication 5, dans lequel le premier moteur (26a) et la paire de moteurs constituée du deuxième moteur (26b) et du troisième moteur (27b) peuvent être commandés par l'intermédiaire d'un équipement (40) et dans lequel le deuxième moteur (26b) et le troisième moteur (27b) peuvent être sychronisés avec l'équipement (40) de manière à ce que le au moins un porte-outil (32) puisse être déplacé dans deux directions (X, Y) formant un angle (12) l'une par rapport à l'autre.

7. Equipement de maniement (20) selon la revendication 2, étant donné que l'équipement de maniement (20) possède un premier, un deuxième, un troisième et un quatrième moteurs (26a, 26b, 27b, 27a), étant donné que le premier moteur (26a) et le deuxième moteur (26b) agissent sur le premier axe de rotation stationnaire (14) et sur le deuxième axe de rotation stationnaire (16), et étant donné que le troisième moteur (27b) et le quatrième moteur (27a) agissent sur le deuxième axe de rotation stationnaire (16) et sur le premier axe de rotation stationnaire (14) de manière à ce que le premier moteur (26a) et le deuxième moteur (26b) puissent être entraînés par la première unité d'entraînement (24) et que la deuxième unité d'entraînement (25) puisse être entraînée par le quatrième moteur (27a) et le troisième moteur (27b).

8. Equipement de maniement (20) selon la revendication 7, dans lequel est prévu un équipement (40) qui synchronise respectivement le premier moteur (26a) et le quatrième moteur (27a) de la première paire de moteurs et le deuxième moteur (26b) et le troisième moteur (27b) de la deuxième paire de moteurs, et le premier moteur (26a) et le quatrième moteur (27a) de la première paire de moteurs ainsi que le deuxième moteur (26b) et le troisième moteur (27b) de la deuxième paire de moteurs peuvent être commandés quant à leurs vitesses de rotation et leurs sens de rotation de manière à ce que le au moins un porte-outil (32) puisse être déplacé dans deux directions (X, Y) formant un angle (12) l'un par rapport à l'autre.

9. Equipement de maniement (20) selon l'une quelconque des revendications 1 à 8, dans lequel chacune des deux unités d'entraînement (24, 25) du au moins un porte-outil (32) est supportée chaque fois par un premier rail (42) et un deuxième rail (44).

10. Equipement de maniement (20) selon la revendication 9, dans lequel le premier et le deuxième rails (42, 44) sont articulés à une structure en cadre (22) de l'unité de maniement (20).

11. Equipement de maniement (20) selon l'une quelconque des revendications 1 à 10, dans lequel l'équipement de maniement (20) porte au moins deux porte-outils (32, 33) à chacun desquels sont affectés respectivement deux unités d'entraînement (24, 25, 60, 62).
